# EUROPEAN PATENT APPLICATION

(11) **EP 0 535 398 A2**
(43) Date of publication of application: **07.04.1993**
(21) Application number: 92115244.3
(22) Date of filing: 05.09.1992
(51) Int. Cl.: G06F 15/403

(54) **Microfilm image retrieval system**

(30) Priority: 04.10.1991 US 771589
(71) Applicant: EASTMAN KODAK COMPANY, Rochester, New York 14650-2201 (US)
(72) Inventor: Laurin, Joseph David, c/o Eastman Kodak Company, Rochester, New York 14650-2201 (US); Dowdey, Mark Christopher, c/o Eastman Kodak Comp., Rochester, New York 14650-2201 (US); Zawalski, David Edward, c/o Eastman Kodak Company, Rochester, New York 14650-2201 (US)
(74) Representative: Schmidt, Peter, Dipl.-Ing.

(57) **Abstract**

A microfilm image retrieval system is disclosed that can automatically organize retrieved images for multiple retrieval requests so that a complete set of retrieved images is generated for each retrieval request without requiring manual sorting. The system is capable of organizing the retrieved images for each retrieval request regardless of whether the retrieved images are being generated from a single location or multiple locations.

## Description

### Field of the Invention

The invention is related to microfilm image retrieval systems. More specifically, the invention is directed to a microfilm image retrieval system for retrieving multiple microfilm images or documents in a digitized format and organizing the retrieved images in sets associated with specific retrieval requests to improve distribution efficiency.

### Background of the Invention

Many business organizations receive numerous documents that arrive into the business organization in chronological order. It is not generally practical to maintain sorted sets of the original documents received by the business organization given that a need may never arise to retrieve and review the documents. Thus, original documents are usually archived using an alternate media that is less bulky and less expensive to store than the original documents. The original documents are generally archived in their order of arrival and a simple index to the location of the document on the alternative media is maintained in order to permit retrieval of the archived document.

Microfilm has historically proven to be a reliable and inexpensive alternative media for archival document storage. The archive index maintained in the case of microfilm is the roll number and the location on the roll for each original document with a cross reference that identifies the document. In order to retrieve an archived document, the index is used to locate the location on the roll of microfilm on which the desired document has been stored and the image of the desired document is copied or retrieved using either conventional photographic processes or electronic imaging systems.

Hundreds of requests to retrieve images from the archive microfilm may occur each day in typical business applications, and each request usually requires several images to be retrieved which results in the retrieval of several thousand images from the archive microfilm on a daily basis. The requests are usually batched and sorted using the simple index the original documents were given when they arrived and were archived to make efficient use of the microfilm retrieval equipment and personal. All images required from a given roll of microfilm are generally scanned working from one of the roll toward the opposite end of the roll. The scanning or retrieval is usually done without regard to any specific request in order to minimize the need for duplicate rolls of microfilm, eliminate the time it would take to move back and forth from one end of a roll of microfilm to the other end to select documents in a particular order, and to prevent the necessity of reloading the same roll of microfilm a number of times. The resulting output, usually in the form of printed documents, must be hand sorted to collate the retrieved documents that correspond to a specific request.

In very high volume applications where the request may take several days to complete, partially sorted sets of images must be maintained manually until all the requested documents are found. In addition, several microfilm retrieval units may be retrieving some of the documents for a given request at the same time at different locations. In each case, additional sorting and handling problems are introduced that may result in the introduction of errors in the retrieval process. Thus, it would be desirable to provide a retrieval system that could automatically organize the retrieved images for multiple retrieval requests so that a complete set of retrieved images is generated for each retrieval request without requiring manually sorting or organization, regardless of whether the retrieved images are being generated from a single location or multiple locations.

### Summary of Invention

The invention provides a microfilm image retrieval system that can automatically organize retrieved images for multiple retrieval requests so that a complete set of retrieved images is generated for each retrieval request without requiring manual sorting. The system is capable of organizing the retrieved images for each retrieval request regardless of whether the retrieved images are being generated from a single location or multiple locations.

More specifically, the system includes at least one document scanner workstation coupled to at least one scanner server; at least one output device coupled to the scanner server; and a control unit for controlling the operation of the document scanner workstation, the scanner server and the output device, wherein documents associated with multiple retrieval requests that are retrieved by the document scanner workstation are grouped into sets that correspond to specific ones of the multiple retrieval requests before the documents are supplied to the output device.

### Brief Description of the Drawings

With the above as background, reference should now be made to the following detailed description of the preferred embodiment of the invention and the accompanying drawings, wherein:
Fig. 1 is a block diagram of a microfilm retrieval system in accordance with the present invention;
Fig. 2 illustrates a physical layout of a pseudo relation database utilized by the microfilm scanner server illustrated in Fig. 1;
Fig. 3 is a logical flow of the scheduler used at the microfilm scanner server illustrated in Fig. 1 to schedule the microfilm scanner server system tasks; and
Fig. 4 illustrates the location of documents on separate rolls of microfilm.

### Detailed Description of Preferred Embodiments

The invention provides a microfilm image retrieval system that combines one or more intelligent microfilm scanner workstations with networking capability and one or more network microfilm scanner servers to form a database management system capable of dynamic multiple concurrent access and updates by the microfilm scanner workstations. In operation, the microfilm image retrieval system allows images coming from multiple microfilm scanner workstations in random order, and without regard to time of arrival for any specific request, to be identified and grouped by the microfilm scanner server for output to one or more destinations as a single sorted set of documents in response to a specific retrieval request.

More specifically, a document set, referred to as a folder, to which each retrieved document belongs is identified when the retrieved document arrives at the network microfilm scanner server, i.e., each folder is used to collect the documents associated with a specific retrieval request. The retrieved documents are made up of one or more single page images, and individual pages can be composed of multiple images and/or computer generated data fragments referred to as "windows". The network microfilm scanner server places the retrieved documents in the appropriate folders which are retained in a database. A disposition can be placed on the folder, any document within the folder, or any image of the document, from any of several sources anytime after the folder is started. Thus, retrieved documents destined to be printed, transmitted via facsimile, routed to other electronic systems, stored on another media, or combinations thereof, can be sent from one or more intelligent microfilm scanners concurrently in a fashion that makes most efficient use of the microfilm retrieval equipment and available personal.

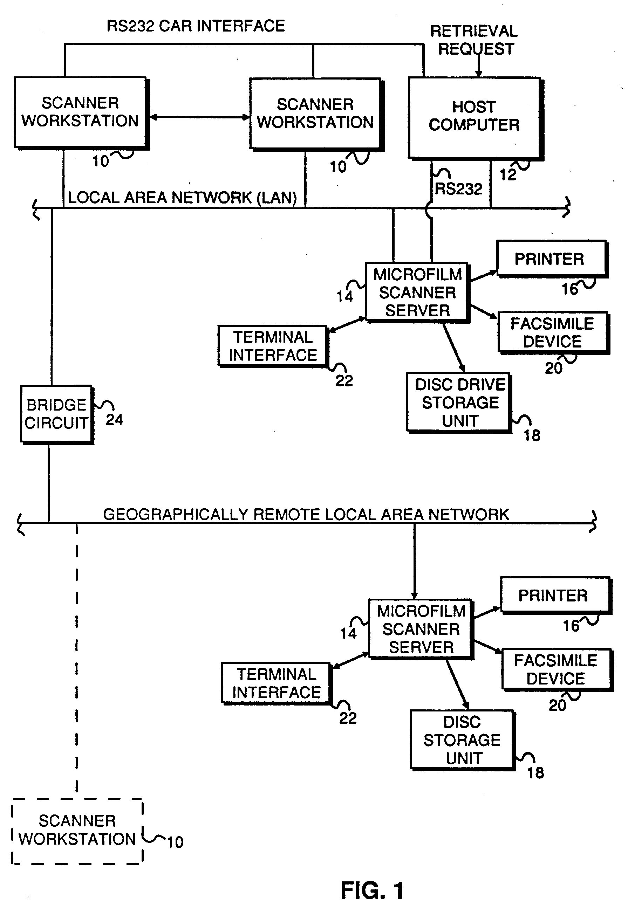

Referring now to Fig. 1, a microfilm image retrieval system in accordance with the present invention is shown including at least one intelligent digital microfilm scanner workstation 10 --for example an IMAGELINK (tm) Digital Workstation manufactured by the Eastman Kodak Company of Rochester, New York which includes an embedded PA-AT platform with a 20 megabyte hard drive, serial and parallel interface ports, keyboard, 3.5 inch floppy disc drive, image processing cards, a printer interface card, and a network interface card-- with networking capability, a host computer 12, at least one microfilm scanner server 14 --for example an IMAGELINK (tm) Network Node manufactured by the Eastman Kodak Company of Rochester, New York which includes a PA-AT platform, a SCSI Disk Controller, a 500 or 125 megabyte SCSI Disk, a serial port, a video display, a 3.5 inch floppy disk drive, a network interface card, and a printer interface card--, and one or more output devices, such as a printer 16, a disc drive storage unit 18 or a facsimile device 20, attached to the microfilm scanner server 14. A user terminal interface 22 is also coupled in the microfilm scanner server 14.

In the illustrated embodiment, the system is arranged so that the scanner workstations 10, the host computer 12 and at least one microfilm scanner server 14 are coupled to a common local area network (LAN). A second geographically remote local area network is also provided to which a microfilm scanner server 14 is attached. The two local area networks are coupled together by a network bridge circuit 24. The local area networks may be either ETHERNET, TOKEN RING or any other standard local area network.

The scanner workstations 10 preferably support the microfilm industry standard Computer Aided Retrieval (CAR) interface extensions to take advantage of the scanner workstations networking capability, and are coupled to the host computer 12 via an RS232 CAR Interface. All CAR commands can be operated in both single direction and bi-directional fashion over an RS232 link. These extensions include: (1) the ability to establish a logical link between the scanner workstation 10 and any device coupled to any microfilm scanner server 14 on the network; (2) obtain the status for an device available at the microfilm scanner server 14; (3) establish folder and document names for images about to be scanned; (4) to direct the image(s) to the microfilm scanner server 14; (5) identify any special image processing algorithms that may be applied to an established folder at the microfilm scanner server 14; (6) remove a folder or document already established at the microfilm scanner server 14; and (7) direct a document or folder to any appropriate output device supported at the microfilm scanner server 14. It should be noted that the image resolution of the retrieved document is established by the scanner workstation 10 at the time it was scanned and may prohibit the retrieved document from being compatible with some output devices supported at the microfilm scanner server 14.

In the system illustrated in Fig. 1, the control data flow is from the host computer 12 to the scanner workstations 10 and to the microfilm scanner servers 14. The image data flow is from the microfilm scanners 10 to the microfilm scanner servers 14. The image data can then be directed to any of the output devices attached to the microfilm scanner server 14 or back to the host computer 12 over the local area network.

In operation, retrieval requests are supplied to the host computer 12 via a terminal, personal computer input, or any other similar type of retrieval requests entry device. The specific means of generating the retrieval request is not shown as being a part of the system in Fig. 1. Conventional systems that make use of microfilm already address the issue of request generation and management and the generation of the retrieval requests will therefore be readily apparent to one of ordinary skill in the art.

At set periods of time a batch sort is done by the host computer 12 on any pending retrieval requests and a list of rolls of microfilm is generated. As in conventional microfilm retrieval systems, the specific rolls are located and taken from a microfilm library and the work is distributed to the various scanner workstations 10. It should be noted that some of the rolls may be located at a remote location and must be provided to scanner workstations 10 attached to the geographically remote local area network. The work distribution is managed by the host computer 12 and Computer Aided Retrieval (CAR) commands are sent from the host computer 12 to each of the scanner workstations 10. These commands instruct the scanner workstation operators to load a specific roll of microfilm.

When a retrieval request is made, the routing information used to return the retrieved documents is saved at the host computer 12. Traditionally, this information would have been printed by the host computer 12 and used to manually match the retrieved documents with the specific retrieval requests so the retrieved documents could be returned to the appropriate requester. In the illustrated system, however, the host computer causes a network session to be established by the scanner workstations 10 with the microfilm scanner server 14 located at the site of the requester.

In addition a folder, if not already established for the specific retrieval request, is created by the host computer 12 which has full control over the naming of folders and can choose a name that adds meaning to the set of images placed into the folder. Each scanner workstation 10 makes a single pass on a each roll of microfilm to be scanned by the that specific scanner workstation 10 and sends the images retrieved from the microfilm to the specified microfilm scanner server 14 containing the folder in which the retrieved document should be placed. The host computer 12 can access the microfilm scanner servers 14 to determine the status of any folder, thereby allowing a check on the progress being made on any specific request at any time.

Once a request is completed, i.e. all of the required documents have been placed in the specified folder, the retrieved documents for the request can be directed by host computer 12 to be output for distribution to the requester via any of the output devices attached to the microfilm scanner server 14. Upon confirmation of delivery, the host computer 12 deletes the folder from the microfilm scanner server 14. Thus, all of the retrieved documents for any specific request are always output from the system as a complete set without requiring manual sorting of documents.

In a preferred mode of operation, the scanner workstation 10 identifies itself, the folder to receive the document(s) about to be transmitted, and if specified, the document name is also supplied, to the microfilm scanner server 14 when a session is established between the two devices. The folder name is used to link the folder to a specific retrieval request. Using the folder concept, which forms a relation between the request and the documents it will come to contain, the folder provides the ability to group documents together which would otherwise have no relationship to one another. If supplied, the scanner workstations 10 can also provide names for each of the documents sent to the folders. The document names can be used to link the simple index each document was given at the time the document was archived to form a cross reference to the retrieved item(s) from specific rolls of microfilm. The microfilm scanner server 14 assigns a document name if the scanner workstation 10 does not provide a document name. In addition, as each image is transmitted, the scanner workstation 10 supplies a time stamp, the microfilm roll number, and the image address it has on the roll of microfilm. This information can be used to collect productivity statistics and perform image validation on each image transaction.

Internal to the microfilm scanner server 14, image sessions are separated into pseudo physical and logical image sessions. Logical image sessions are used to maintain a network session level connection between the microfilm scanner server 14 and the scanner workstation 10, but release to a pool of image transaction resources the special resources needed during the actual image transfer. A logical image session between the scanner workstations 10 and the microfilm scanner server 14 is considered to exist while the image is being scanned and any special image processing algorithms are being applied at the scanner workstation 10. Once the image processing is complete, the scanner workstation 10 performs image compression and network transfer as a continuous concurrent set of operations. During this time, the microfilm scanner server 14 maintains a pseudo-physical image session with the scanner workstation 10 and provides uninterrupted access to the resources needed for high speed image transfer.

Sustained rates of 400 kilobyte per second have been achieved with 10 megabit ETHERNET utilizing the above-described procedure. The 400 kilobyte limit was the result of the maximum disk transfer rate for the specific disk systems used to perform the procedure. Transfers rates of 600 kilobyte per second, however, are readily possible with existing conventional hardware.

The logical image session is maintained until it is terminated by the scanner workstation 10. All images that arrive at the microfilm scanner server from a given scanner workstation 10 while the logical image session is active are considered to be a part of a single document. The microfilm scanner server 14 can maintain many concurrent logical and physical image sessions with many scanner workstations 10, where the images can be placed in any identified folder(s). The distinction between a logical and physical image session is maintained entirely within the microfilm scanner server 14.

As mentioned above the scanner workstation 10 initiates the image session and identifies the folder in which the images are to be placed. At this point, from a network perspective, a physical session between the scanner workstation 10 and the microfilm scanner server 14 does exist, but the microfilm scanner server 14 reserves within the application software a pseudo-logical image session between the two until it receives a start image record. The microfilm scanner server 14 maintains three sets of double image buffers for image transfer. It attempts to assign one of the sets to a scanner workstation 10 only after it receives a start image record, thereby putting the application software into a pseudo-physical image session state. Once a buffer set is assigned, the microfilm scanner server 14 keeps a constant buffer available to receive image date even while writing a buffer to disk by simply doing an alternate receive across the network to one buffer while it writes the other to disk. The microfilm scanner server 14 image transfer resources are released back to the pool of image transfer resources as soon as it receives an end image record. The actual network session is not terminated, thus the microfilm scanner server 14 application software re-establishes the pseudo-logical image session state that existed prior to receiving the start image record. During this time, the scanner workstation 10 is scanning and processing the next image to become a member of the same document. The freed buffer set is assigned to any other scanner workstation 10 with a pending start image record that has not been serviced by one of the other two potentially free buffer sets. This process continues until the scanner workstation 10 notifies the microfilm scanner server 14, via an end job record, that the network session is to end.

Preferably, the applications network software is written using one of the industry standard session level network application interfaces such as NETBIOS. This allows the system to function, without alteration, with both ETHERNET and TOKEN RING network topologies, as well as most network protocol stacks found in the personal computer local area network environment in use today.

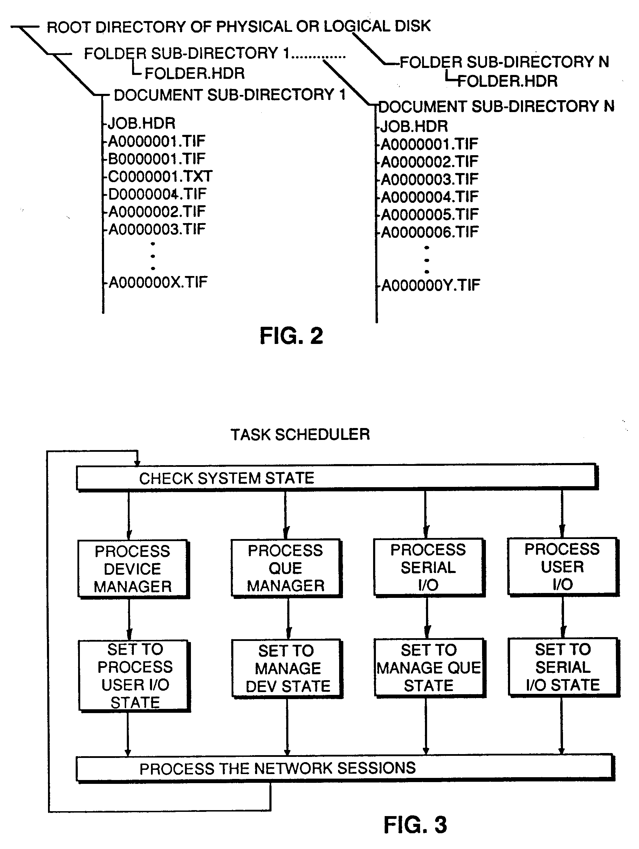

The image database at the microfilm scanner server 14 is preferably modeled after established pseudo-relational database methods. Fig. 2 illustrates a physical layout of the pseudo relational database and identifies several of the relation table files used by the microfilm scanner server 14. The FOLDER. DIR file is found in the microfilm scanner server's 14 electronic mass storage media root directory and acts as the microfilm scanner server's 14 folder directory. It is maintained in a sorted order and identifies all active folders known to the system. The FOLDER.HDR file found in each folder sub-directory contains a sorted list of all the names of all the documents found in the folder. The FOLDER.HDR file identifies the original image processing algorithms applied to all documents found in the folder and keeps a running count of all the documents received at the folder. The JOB.HDR file found with each document contains specific information regarding the roll of microfilm the document came from, the scanner workstation 10 it was scanned on, the time and date the document was generated and an index to each successful image file that was received into the document. The JOB.HDR file also contains folder validation information which insures the integrity of it's linkage to the folder in which the document is found.

Image files found within a document are identified with an appropriate extension. For example, the .TIF extension, indicates it is an image file that conforms to the defacto electronic image file standards, Tagged Image File Format (TIFF). When a single page is composed of more than one image or computer generated window, the file name prefix identifies each window. For example, if the third image in a (TIFF) document is composed of two windows, the first window will be named A3.TIF and the second B3.TIF. Windows and or pages composed of computer generated text are given a .TXT extension but otherwise conform to the naming convention defined above.

Using the techniques employed in this implementation there is no need to lock an image file. In addition, folders support multiple updates occurring concurrently. This is true for additions to, deletions from or replacement of documents within any folder. Folders and documents also support multiple concurrent output to any of the supported output image capable devices, media, and environments. These output services on a folder and/or document can occur concurrent with folder and document updates from the scanner workstations 10.

The microfilm scanner server 14 gives the scanner workstation 10 priority for all the activities the scanner workstation 10 invokes. In the case of image transfer, it only inhibits a scanner workstation 10 from transferring an image when all the image receive resources are in use at the microfilm scanner server 14 by other scanner workstations or when the hard disk capacity at the microfilm scanner server 14 has been reached.

Conflicts that arise at the microfilm scanner server 14 involving a given folder or document are always resolved in favor of the scanner workstation 10 as not to impede it's performance. For example, if an existing folder is given a DELETE disposition, and during its removal an scanner workstation 10 establishes an image session for the same folder, no documents that arrive after the DELETE process has started will be removed, but all documents that existed at the time the DELETE processed started will be removed. If a DELETE disposition is placed on a folder that is actively receiving documents, the DELETE disposition will be ignored.

The microfilm scanner server 14 also preferably maintains a computer readable ascii text file at all folder and document levels. The text file can be used for, folder and document headers, facsimile cover sheets, or as a user specified keyword search table.

The microfilm scanner server 14 also provides several services in addition to its image organization features to enhance handling of retrieved images from microfilm. Folders may be directed to any of several image capable output services. For example, facsimile, high speed - high quality paper output, gateway services to multiple network protocols and topologies, removable media, and/or image display devices.

Additionally, the scanner workstation 10 has the ability to have documents transmitted and immediately posted to any of the output services supported by the microfilm scanner server 14 without being associated with a specified folder. In this mode, the images for a document are placed into special reserved folders used internally by the microfilm scanner server 14 to service specific devices. When the last image of the document is received the entity relation for the document is placed into the identified output service queue of the service selected to receive the document. When the service is complete the document is removed from the microfilm scanner server 14.

The microfilm scanner server 14 uses three concepts for task control. The first and most straight forward is task scheduling. Fig. 3 is a logical flow of the scheduler used at the microfilm scanner server 14 to schedule the microfilm scanner server 14 system tasks. Each task is responsible for a system entity, for example the output device manager handles all image output capable devices.

The system design allows the network task to consume as much of the CPU resources as is required up to the entire capacity of the system. This is done at the expense of all other tasks to insure optimum image transfer performance. Each of the other tasks under less intense periods share the same slice of the systems resources. Within a single task, which may be responsible for several sub-processes, there is again levels of system resource management.

The microfilm scanner server 14 is responsible for managing the output devices connected thereto and must concurrently process all image output to all the output devices it manages. To accomplish this task, it uses several techniques to make the most of the CPU resources it is given. At times, for example, it suspends a particular printer sub-process while waiting for a particular printer's I/O operation to complete. Some devices are scheduled to be processed at preset time intervals, for example the rate a which the facsimile device's status is returned. Others, for example special image decompression hardware, schedule themselves to be serviced upon demand.

The user I/O task gives an equal share of the CPU resources it is given to each background computational processes it invokes, and key strokes by the user are processed on demand. The user I/O task can invoke several computational tasks to be processed concurrently. As more are invoked, they simply split the total CPU resource the user I/O task is given.

The serial I/O task is both a communications driver and a background task. The background task is scheduled at the same level as the other primary tasks of the microfilm scanner server 14 system. The background portion of the serial I/O task is always suspended while a serial communications transfer is occurring. The communications driver uses a record packet control protocol to transfer data into and out of the microfilm scanner server 14 via a serial line. No image data is transferred using this path. It is simply an alternative method of controlling the microfilm scanner server 14 from a host computer that is limited to serial communications to perform control. The background task portion of this task is used to complete any computational request made by the host computer 12. All requests made by the host computer 12 are acknowledged with a status returned for the results of the request. External to the serial I/O task the microfilm scanner server 14 maintains a watchdog timer for all transaction records. This watchdog timer is used to prevent communication deadlocks due to communication hardware failures.

The queue management task acts as the flow control for all image output to all the image capable devices. It also manages the removal of all the image and image control data structures. Each image output device has an associated job queue. When an image set, folder or document, is requested to be sent to a particular image device the information needed to complete the request is placed into an image device queue. In the case of printers, the queue manager processes each image of the request one at a time and passes only a single image's information to the printer device sub-process. Once the printer device sub-process has indicated a print is complete the queue manager will process the next image of the set. In the case of the facsimile device, a list of the image document sets is built and passed to the facsimile sub-system. A simple round robin approach to queue handling is done to manage this task.

All the task management is done to minimize excessive disk I/O or thrashing, as the disk I/O is the physical limiting factor in this system. The system is designed to cause the disk thrashing to be minimized for network image transfer as much as is possible.

The network task is run every 100 micro seconds, and all outstanding network transactions are run to completion prior to returning to the next non-network task to be serviced. The network task itself is a multithreaded context driven process. Each network record received for a particular session results in a specific record transaction processor being invoked. Each session has a context state maintained at the microfilm scanner server 14. Record types received are either processed, valid for the context state, or rejected. A processed record may or may not cause a context state change depending on the state of the session, the record received, and the results of processing. Some transactions occur in a synchronous mode without the need for response handshakes. Others occur asynchronously and require a response. The microfilm scanner server 14 is also capable of having asynchronous transactions occur within a series of synchronous transactions for a given session and revert back to handling the completion of the synchronous transactions once the asynchronous transactions are complete. Error recovery within the network task occurs at many levels and result in many recovery paths. Some error recovery is confined to the session in which it occurs, others affect all active threads and sessions of the network task. Remote network failures at scanner workstations 10 are detected by the microfilm scanner server 14 and appropriate recovery actions are taken to insure the integrity of completed image transactions. Incomplete transactions are backed out. All network transactions are recorded to form an audit trail of network traffic. A date stamp, the transaction completion code, and the record transaction processor's identification is recorded.

The second method of task management used is the ability of a task to suspend itself. Where the reason for the suspension could be to wait for some input/output device to complete its transaction. As described above, several of the tasks use this type of control.

The third method of task management used is the ability of one task to dynamically suspend another task. This is done when one task requires intense CPU resources or to resolve transaction conflicts. The network task is the only task to use this method of operation but this service is available to all the tasks, and each can suspend all operations of any other, including the operation of the network task.

The preferred IMAGELINK (tm) Network Node is capable of supporting up to two printers (preferably laser printers having a resolution of 400 dpi) and is able to print up to 15 prints per minute on each printer concurrently. Each printer can be equipped with a multiple output bin sort capability that allows any of the folders or documents to be directed to any of the supported sort bins. Thus, scanner workstation 10 can direct documents not destined to a specified folder to a specified sort bin of one of the printers. Thus, if desired, all requests may be physically sorted without the use of folders by the output equipment located at the microfilm scanner server 14 site, or when folders are used, the contents of a specified folder can be directed to any of the sort bins. The individual documents in a folder can also be output in any order and if required to any output sort bin(s) supported by the output printer, thus adding additional level of sort ability.

The IMAGELINK (tm) Network Node is also capable of supporting up to four facsimile lines, each operating at up to 9600 baud. Facsimile jobs can preferably be submitted from the scanner workstation 10, a terminal interface 22, of via the host computer 12, and are treated as separate entities from the folders, documents, and images. Thus, transaction operations on one do not alter the other. Folders and documents can be directed to multiple facsimile locations, and if there are sufficient lines to support it, the operations can be concurrent.

It will be understood that the microfilm scanner server 14 can be configured to support various combinations of printers, facsimile and other output devices. The microfilm scanner server 14 can also be configured to support a gateway service to redirect folders and/or documents to environments using other network topologies, protocols, and operating systems. Similarly the microfilm scanner server 14 can be configured to support directing folders and/or documents to removable media such as magnetic or optical disks. The microfilm scanner server 14 can also support an extensive set of user interface services via the terminal interface 22.

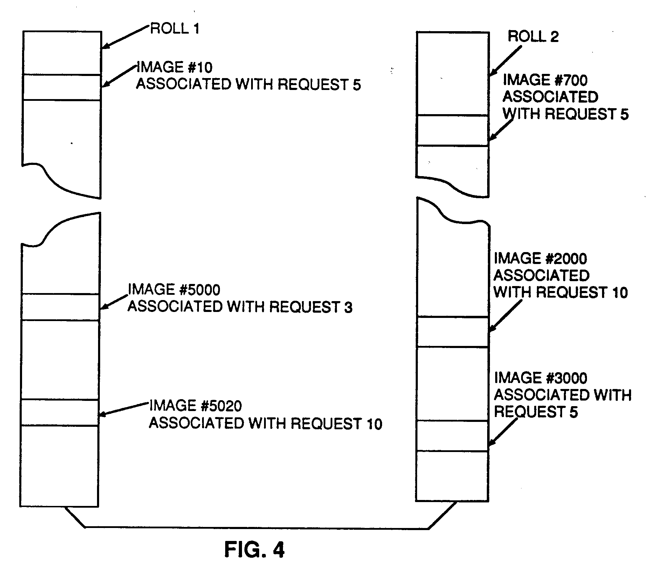

The advantages obtained by the illustrated system are graphically illustrated in Fig. 4. which depicts two rolls of microfilm. The system allows the rolls to be geographically distant from one another, processed in no particular order, and with no constraints on the time either of the two rolls are processed. For example, roll number one is loaded into a first one of the scanner workstations 10, which subsequently does a sequential search of the microfilm, stops first at image #10, scans the image, and performs any special image processing required. Next, the scanner workstation 10 opens an image session with the microfilm scanner server 14 and transmits image #10 to the microfilm scanner server 14. As the image session is opened, all information regarding the folder and document to receive the image is transmitted to the microfilm scanner server 14 from the scanner workstation 10. The scanner workstation 10 searches to the next image to be scanned, for example image #5000 in the illustrated example, and the process described above is repeated. At anytime during a search of a roll of microfilm the scanner workstation 10 can end a session with one microfilm scanner server 14 and start a session with another microfilm scanner server 14 as the application requires.

Concurrent with the operations of the first scanner workstation 10 the same microfilm scanner server 14 can be receiving images from additional scanner workstations, for example from roll #2, to the same folder/document combinations. This operation provides the simplest and most efficient use of both the microfilm retrieval equipment, and the users at both the scanner workstation 10 and the microfilm scanner server 14 locations. Rolls are loaded once, all images retrieved and the invention does the sorting and associating to bring the correct images to the image output device required to match the request.

The invention has been described with particular reference to certain preferred embodiments thereof. It will be understood, however, that variations and modification are possible within the scope of the appended claims. For example, an alternate method of implementing the invention would involve the use of distributed database practices, where the images scanned by a scanner workstation 10 remain on some local storage media at the scanner workstation 10. Such a system would require both the hardware and software resources be duplicated at each scanner workstation 10. To make this a practical alternative, software capable of running on a multitude of customer computer platforms is required to initiate request in a broadcast fashion for receipt of the contents of a folder and/or document. This multiplatform software must be able to detect a scanner workstation's absence of response and notify the requester that some of the images may not be available. In addition, the user interface at the scanner workstations 10 can be used to allow an operator to establish network sessions and define folder names to receive images sent from the scanner workstation 10 if a host computer 12 is not employed. Similarly, the distribution and removal operations can be accomplished at both the user interface of any scanner work station 10 or the terminal interface 22 attached to any microfilm scanner server 14. Finally, it will be readily apparent that the number of scanner workstations 10, microfilm scanner servers 14, and local area networks that are interconnected can be readily altered to conform to specific system requirements.

## Claims

1. A document retrieval system characterized by: at least one document scanner workstation coupled to at least one scanner server; at least one output device coupled to the scanner server; and control means for controlling the operation of the document scanner workstation, the scanner server and the output device, wherein documents associated with multiple retrieval requests that are retrieved by the document scanner workstation are grouped into sets that correspond to specific ones of the multiple retrieval requests before the documents are supplied to the output device.

2. A document retrieval system as claimed in claim 1, wherein the document scanner workstation scan microfilm images corresponding to the documents to be retrieved and generates digital representations of the microfilm images.

3. A document retrieval system as claimed in claim 1, wherein the document scanner workstation is coupled to the scanner server via a local area network.

4. A document retrieval system as claimed in claim 3, further comprising at least one geographically remote local area network coupled to the local area network, wherein at least one of a document scanner workstation and a scanner server is coupled to the geographically remote local area network.

5. A document retrieval system characterized by: a first local area network, at least one of a microfilm scanner workstation and a microfilm scanner server coupled to the first local area network; a second local area network coupled to the first local area network; at least one of a microfilm scanner workstation and a microfilm scanner server coupled to the second local area network; a host computer coupled to at least one of the first and second local area networks for receiving multiple document retrieval reguests and controlling the operation of the microfilm scanner workstation and the microfilm scanner server to process the multiple document retrieval requests, wherein documents associated with multiple retrieval requests that are retrieved by the document scanner workstation are grouped into sets that correspond to specific ones of the multiple retrieval requests before the documents are supplied to an output device coupled to the microfilm scanner server.
